# EUROPÄISCHE PATENTSCHRIFT

(11) **EP 2 070 144 B1**
(45) Veröffentlichungstag und Bekanntmachung des Hinweises auf die Patenterteilung: **11.11.2015**
(21) Anmeldenummer: 07818396.9
(22) Anmeldetag: 25.09.2007
(51) Int. Cl.: H01M 8/04, H01M 8/06, H01M 8/24

(54) **BRENNSTOFFZELLENSYSTEM**
FUEL CELL SYSTEM
SYSTÈME DE PILES À COMBUSTIBLE

(30) Priorität: 05.10.2006 DE 102006047493
(43) Veröffentlichungstag der Anmeldung: 17.06.2009
(73) Patentinhaber: WS Reformer GmbH, 71272 Renningen (DE)
(72) Erfinder: WÜNNING, Joachim, A., 71229 Leonberg (DE); SCHMID, Hans-Peter, 73666 Hohengehren (DE)
(74) Vertreter: Rüger, Barthelt & Abel
(86) Internationale Anmeldenummer: PCT/EP2007/008311
(87) Internationale Veröffentlichungsnummer: WO 2008/040470

(56) Entgegenhaltungen:
- EP-A- 1 645 316
- WO-A-2005/084771
- WO-A-2006/053727
- GB-A- 2 405 028
- US-A- 3 964 930
- US-A- 4 554 223
- US-A1- 2002 119 352
- US-A1- 2005 164 051

## Beschreibung

Brennstoff zellensysteme dienen zur Umwandlung der Energie flüssiger und gasförmiger Brennstoffe in elektrischen Strom und Wärme. Die Energieumwandlung in der Brennstoffzelle erfolgt lautlos mit einem Wirkungsgrad zwischen 50% und 60% bei der Umsetzung von chemischer in elektrische Energie - je nach der gewählten Stromdichte in der Zelle. Die Vorteile gegenüber einem motorgetriebenen Stromgenerator wirken sich insbesondere bei kleinen Leistungen im kW-Bereich aus, wie sie für die netzferne Stromversorgung und die dezentrale Kraft-Wärmekopplung gebraucht werden. Deshalb wird weltweit an der Entwicklung von Brennstoffzellensystemen gearbeitet, allerdings bisher ohne Durchbruch am Markt.

Die Gründe dafür liegen in erster Linie bei den zu hohen Herstellungskosten für das vollständige, sehr komplexe System: Es besteht aus der Brennstoffaufbereitung (sog. fuelprocessor) mit einem Reformer und dem Brennstoffzellenstapel (sog. stack) sowie peripheren Bauelementen, wie Wärmetauschern, Pumpen, Ventilen und elektrischen Geräten für den automatischen Betrieb.

Die mit Polymermembranen ausgestatteten PEM-Brennstoffzellen für Betriebstemperaturen bis etwa 80°C erfordern eine CO-Feinreinigung des Reformats bis in den ppm-Bereich und ein aufwendiges Wassermanagement zur Befeuchtung der Kathodenluft. Die Verdampfung des Prozesswassers für den Dampfreformer kann in diesem Fall nicht mit der Abwärme des Stacks erfolgen, weil dafür die Temperatur zu niedrig ist.

Ein kompakter Reformer mit integriertem Verdampfer wird in der WO2005/084771 A2 beschrieben. Damit kann die Reformierung mit einem Wirkungsgrad von bis zu 80% durchgeführt werden. Daraus resultiert ein elektrischer Wirkungsgrad für das gesamte System von 35 bis 40%, wenn man für Verluste durch Hilfsaggregate wie Pumpen, Gebläse und Stromwandler 10 bis 15% der Bruttostromerzeugung einkalkuliert.

Bei den neuerdings verfügbaren Hochtemperatur-PEM-Zellen (Druckschrift der Fa. PEMEAS und Pat), die bei Temperaturen von 120 bis 200°C arbeiten, kann die CO-Feinreinigung und das Wassermanagement entfallen, was eine erhebliche Vereinfachung des Prozessablaufs erlaubt. Außerdem kann die Abwärme des Stacks zur Verdampfung des Prozesswassers herangezogen werden.

Der Erfindung liegt die Aufgabe zugrunde, auf der Basis von Hochtemperaturzellen den Gesamtprozess der noch weiter zu vereinfachen, um die Herstellkosten zu senken und den automatischen Betrieb sicherer zu gestalten. Dabei soll der elektrische Wirkungsgrad des Gesamtsystems nicht unter das Niveau von 35 bis 40% absinken, wenn möglich sogar höher liegen.

Diese Aufgabe wird mit einem Brennstoffzellensystem mit den Merkmalen des Anspruchs 1 gelöst.

Der Hochtemperaturstack und vorzugsweise auch die Shiftstufe bzw. der Shiftreaktor werden in direktem Kontakt zu Verdampfungskanälen gekühlt und mit Hilfe des Dampfdrucks thermostatisiert. So werden die Abwärme zumindest des Stacks und gegebenenfalls auch des Shiftreaktors und genutzt, was den Wirkungsgrad verbessert.

Der apparative Aufwand wird reduziert. Neben dem Stack und dem Reformer werden im Wesentlichen nur ein Luftgebläse, eine Wasserpumpe, ein Kondensator sowie einige Ventile und Armaturen benötigt. Ein gesondert beheizter Dampferzeuger ist überflüssig.

Die Prozessregelung und- Überwachung ist besonders einfach. Es gibt nur einen Regelkreis für die Temperatur des Reformers. Für die Mengenströme von Brennstoff, Luft und Wasser reicht eine grobe proportionale Steuerung aus.

Die elektrischen Wirkungsgrade des Gesamtsystems liegen höher als bei den Systemen nach dem Stand der Technik. In der Kombination mit einem Dampfreformer kann ein elektrischer Wirkungsgrad von über 40%, mit einem autothermen Reformer bis zu 35% erreicht werden. Der Gesamtwirkungsgrad für Strom und Wärme liegt in beiden Fällen bei etwa 100%.

In den Figuren der Zeichnung sind Ausführungsbeispiele der Erfindung veranschaulicht. Die Zeichnung ergänzt die Beschreibung. Es zeigen:
Figur 1 ein Ausführungsbeispiel des erfindungsgemäßen Systems, in schematischer Darstellung, und
Figur 2 eine abgewandelte Ausführungsform eines erfindungsgemäßen Systems.

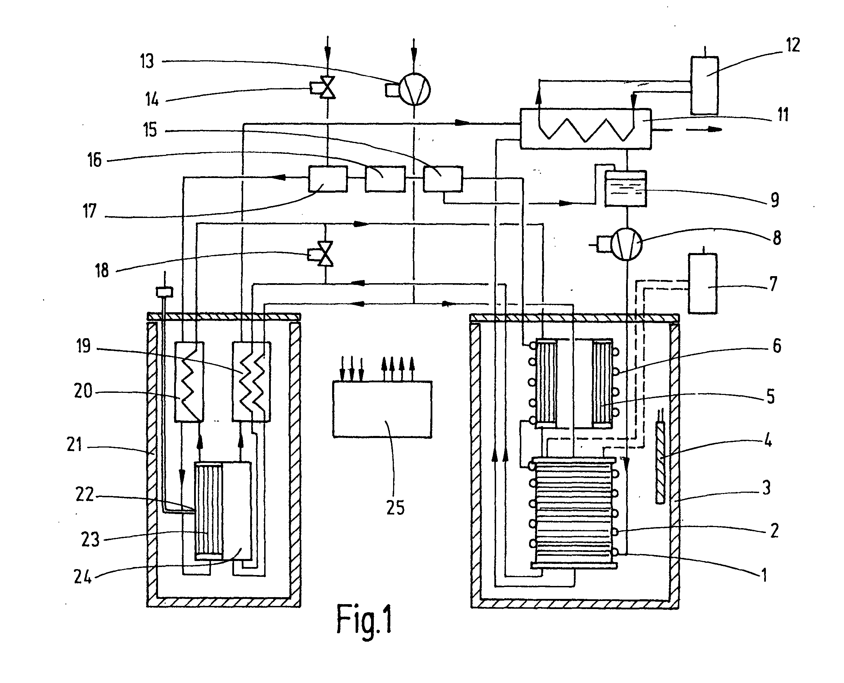

### Beispiel gemäß Fig. 1

Zur Erzeugung von Elektroenergie ist ein Brennstoffzellen-Stack 1 vorgesehen, der bei einer Temperatur über 100°C, vorzugsweise etwa 120°C arbeitet. Der Dampf für den Reformer wird mit der Abwärme des Stacks 1 erzeugt, das gleichzeitig mit dem Dampfdruck bei der gewünschten Temperatur thermostatisiert wird. Dazu dienen Verdampfungskanäle 2 z.B. in Form eines direkt an dem Stack 1 angeordneten, z.B. als Rohrschlange ausgebildeten Verdampferrohres (oder mehrerer) sowie ein Druckventil 16 dem Ausgang des so gebildeten Verdampfers. Im einfachsten Fall, z.B. bei konstanter Leistung, ist das Druckventil ein Einstellventil. Bei wechselnder Last ist es z.B. ein federbelastetes Druckhalteventil. Die so gebildete Druckhalteeinrichtung kann alternativ auch durch ein gesteuertes Ventil mit elektronischem Regler gebildet sein.

Da die selbsttätige Regelung der Stacktemperatur über den Dampfdruck nur im Nassdampfgebiet funktioniert, wird von einer zur Speisung des Verdampferkanals 2 vorgesehene Pumpe 8 mehr Wasser in den Verdampfer, d.h. die Verdampfungskanäle 2 gefördert als für die Verdampfungskühlung erforderlich ist. Es entsteht ein Dampf-Wasser-Gemisch. Der Wasserüberschuss wird in einem Abscheider 15 abgetrennt, der im Anschluss an das Druckhalteventil 16 angeordnet ist. Das in dem Abscheider 15 abgeschiedene Wasser wird in einen Pufferbehälter 9 zurückgeführt.

Die vom Stack erzeugte Dampfmenge ist proportional zu der in dem Stack umgesetzten Leistung (und somit auch proportional zu der erzeugten elektrischen Leistung) und ergibt ein S/C-Verhältnis. (Steam/Carbon-) von ca. Fünf. Der hohe Dampfüberschuss gegenüber einem üblichen Verhältnis von 3 kommt der Prozesssicherheit zugute, und zwar ohne Nachteile für den Wirkungsgrad.

Die Verdampfung des Wassers setzt eine Mindesttemperatur des Stacks 1 voraus. Deshalb wird der Stack 1 vorzugsweise im Standby-Modus auf Temperatur gehalten. Dazu dienen ein vakuumisoliertes Gefäß 3, in dem der Stack 1 nebst einer Heizung 4 angeordnet ist.

Nach der Reformierung muss der CO-Gehalt des Reformats auch bei Hochtemperaturstacks von 8 bis 12 Vol.% auf etwa 1 Vol.% abgesenkt werden, was mit der exothermen Shiftreaktion an Katalysatoren im Temperaturbereich um 200°C erreicht wird. Normalerweise wird der Shiftreaktor in den Reformer integriert (s. WO 2005/084771). Bei der Erfindung wird dieses Prinzip verlassen. Dieser Temperaturbereich überdeckt sich mit dem Temperaturbereich des Stacks 1. Er beträgt z.B. bei 160°C bis 200°C. Deshalb wird es bevorzugt, einen Shiftreaktor 5, der mit Verdampfungskanälen 6 in Verbidnung steht, in den Thermobehälter des Stacks 1 einzubauen. So kann auch er im Standby-Modus mit der Heizung 4 betriebsbereit auf der Arbeitstemperatur gehalten werden. Außerdem können die Verdampferrohre 2 und 6 in Reihe geschaltet werden, so dass sie nacheinander von Wasser/Dampf durchflossen werden.

An das Druckhalteventil 16 kann eine Dampfstrahlpumpe 17 angeschlossen sein, um diese zu speisen. Durch sie wird über ein Ventil 14, das an ihren Sauganschluss angeschlossen ist, Brennstoff angesaugt, womit eine Brennstoffpumpe entfällt. Die Dampfstrahlpumpe gibt an ihrem Ausgang ein Dampf-Brennstoff-Gemisch ab. Dieses wird über einen Wärmetauscher 20, in dem es weiter erwärmt wird, einem Reformer 23 zugeleitet. Der Wärmetauscher 20 wird mit der Wärme des erzeugten Reformats beheizt.

Bei dem Dampfreformer nach Fig. 1 befinden sich in einem wärmeisolierten Gefäss 21 folgende Bauelemente:
- der indirekt beheizte und mit Katalysator gefüllte Reformierungsreaktor 23,
- die Brennkammer 24, die zur Vermeidung der thermischen NOX-Bildung zweckmäßigerweise nach dem Prinzip der flammenlosen Oxidation arbeitet (FLOX),
- ein Wärmetauscher 20, in dem das von der Strahlpumpe 17 abgegebene Brennstoff/Dampfgemisch vorzugsweise im Gegenstrom mit dem abströmenden Reformat vorgewärmt wird, und
- ein-Wärmetauscher 19 mit dem die von einem Gebläse 13 geförderte Verbrennungsluft und das im Wesentlichen aus dem Restgas der Brennstoffzelle 1 bestehende Heizgas vorzugsweise im Gegenstrom mit dem Abgas der Brennkammer 24 vorgewärmt werden.

Wenn für die Wärmetauscher 19 und 20 hocheffiziente Gegenstromapparate verwendet werden, beträgt der Wirkungsgrad des Reformers über 90% und liegt damit 10% höher als bei einem Reformer mit integriertem Verdampfer für Niedertemperaturstacks.

Das Reformat wird in den Shiftreaktor 5 und danach in das Stack 1 geleitet. Das aus dem Stack austretende Restgas enthält noch 15 bis 25% des Energiegehaltes des Reformats. Das reicht für die Beheizung des Reformers nicht ganz aus, weshalb über das Ventil 18 Reformat zu der Brennkammer 24 zurückgeführt werden kann.

Das Abgas der Brennkammer 24 und die Abluft des Stacks 1 werden in einem Kondensator 11 bis auf die Kondensationstemperatur abgekühlt, um den Wasserkreislauf zu schließen. Daraus ergibt sich ein Gesamtwirkungsgrad des Systems für Strom und Wärme von ca. 100% bezogen auf den unteren Heizwert (sog. Brennwertbetrieb). An den Kondensator 11 ist ein ein Wärmeauskoppler angeschlossen, an dem Heizleistung z.B. zur Gebäudeheizung abgenommen werden kann.

Die automatische Regelung des Gesamtsystems mit der Regeleinrichtung 25 ist besonders einfach. Je nach dem, ob das System strom- oder wärmegeführt arbeiten soll, wird mit dem Signal der Stromentnahme 7 oder der Wärmeauskopplung 12
- die Brennstoffzufuhr mit dem Ventil 14
- die Luft mit dem Gebläse 13 und/oder
- die Wassermenge mit der Pumpe 8 angenähert proportional verändert.

Das genaue Verhältnis der Mengenströme beeinträchtigt die Prozesssicherheit nicht, weil Wasser im Überschuss gefördert wird und die Luftzahl ebenfalls unkritisch ist. Der elektrische Wirkungsgrad des Systems wird nur unwesentlich beeinflusst. Der Gesamtwirkungsgrad ist auch wegen der Abkühlung der Abgase bis zur Kondensation sehr gut.

Die Temperaturregelung des Dampfreformers mit dem Temperaturfühler 22 und dem Ventil 18 ist der einzige erforderliche Regelkreis.

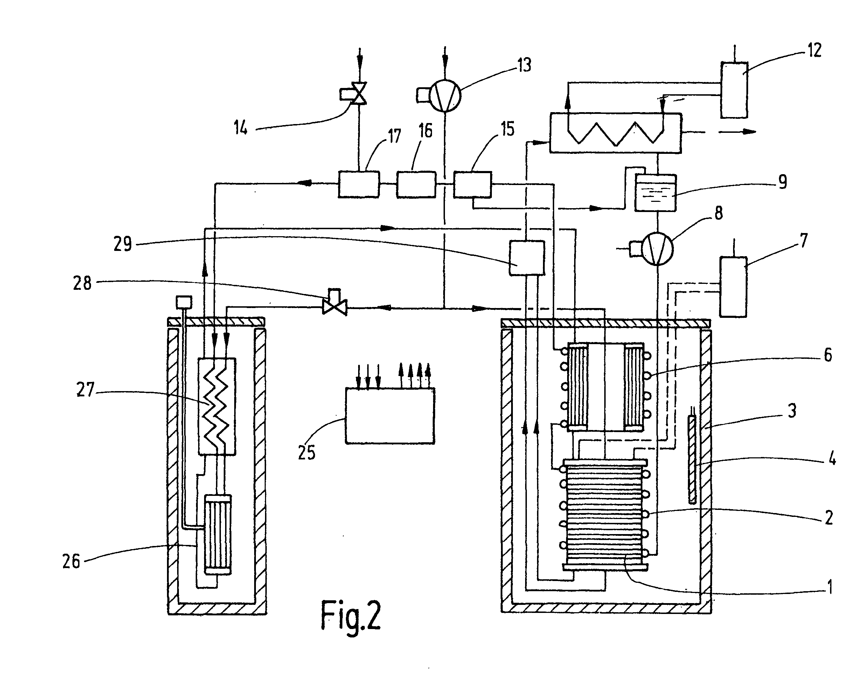

### Beispiel gemäß Fig. 2

Das erfindungsgemäße Brennstoffzellensystem kann auch mit einem autothermen Reformer gekoppelt werden. Die vorige Beschreibung gilt unter Zugrundelegung gleicher Bezugszeichen entsprechend. Zusätzlich gilt folgendes. Die autotherme Reformierung von Brennstoffen hat gegenüber der Dampfreformierung gewisse Vorteile, wie:
- die kompakte Bauweise, weil die indirekte Wärmeübertragung entfällt,
- kurze Anfahrzeiten und
- rußfreier Betrieb - auch mit höheren (längerkettigen) Kohlenwasserstoffen als Brennstoff, wie z.B. Öl.

Dagegen steht der Nachteil, dass das Restgas des Stacks 1 mit einem Energiegehalt von 15 bis 25% nicht für die Reformierung genutzt werden kann. Im selben Maße sinkt der elektrische Wirkungsgrad. Der Gesamtwirkungsgrad bleibt dagegen bei 100%, weil im Kondensationsbetrieb gearbeitet wird.

Die Bezeichnungen in Fig. 2 entsprechen der in Fig. 1 mit folgenden Abweichungen:
Der autotherme Reformer enthält eine Reaktionskammer 26 und einen Wärmetauscher 27 für die Vorwärmung des Dampf/Brennstoff-Gemisches und der Luft mit dem abströmenden Reformat. Die Temperatur im Reaktor 26 wird mit dem Fühler 22 und dem Luftventil 28 geregelt. Der hohe Dampfüberschuss, den die Stackkühlung liefert, kommt der Prozesssicherheit insbesondere bei schwierigen Brennstoffen (Öl usw.) zugute. Der Wirkungsgrad des Reformers liegt über 90%, wenn der Wärmetauscher 27 ein hochwirksamer Gegenstromapparat ist. Das im Stack nicht umgesetzte Restgas wird in einer Nachbrennkammer 29 mit Luft verbrannt und dann in den Kondensator 11 geleitet.

Die wichtigsten Vorteile sind:
- Der Hochtemperaturstack und zweckmässig auch die Shiftstufe werden in direktem Kontakt zu Verdampfungskanälen gekühlt und mit Hilfe des Dampfdrucks thermostatisiert.
- Der apparative Aufwand wird reduziert. Neben dem Stack und dem Reformer werden nur ein Luftgebläse, eine Wasserpumpe, ein Kondensator sowie einige Ventile und Armaturen benötigt.
- Die Prozessregelung und- Überwachung ist besonders einfach. Es gibt nur einen Regelkreis für die Temperatur des Reformers. Für die Mengenströme von Brennstoff, Luft und Wasser reicht eine grobe Proportionale Steuerung aus.
- Die elektrischen Wirkungsgrade des Gesamtsystems liegen höher als bei den Systemen nach dem Stand der Technik. In der Kombination mit einem Dampfreformer kann ein elektrischer Wirkungsgrad von über 40%, mit einem autothermen Reformer bis zu 35 erreicht werden. Der Gesamtwirkungsgrad für Strom und Wärme liegt in beiden Fällen bei etwa 100%.

Für die Reformierung muss das Dampf/Brennstoff-Verhältnis, das sog. Steam/Carbon- oder S/C-Verhältnis, geregelt werden, z.B. bei der Dampfreformierung bei etwa S/C= 3. Eine Brennstoffzelle liefert unabhängig von der Leistung etwa je zur Hälfte Strom und Abwärme. Wenn die Abwärme zur Dampferzeugung benutzt wird, ergibt das ein S/C-Verhältnis von ungefähr 5. Dies ist zwar mehr als erforderlich, dafür entfällt aber der Aufwand für die Messung der Mengenströme und deren Regelung.

So wird z.B. die Stacktemperatur mit einem Dampfdruck von 10 bar bei etwa 160°C bis 180°C thermostatisiert und zwar unabhängig von der Leistung. Dies kann mit einem einfachen Druckhalteventil erreicht werden.

Das erfindungsgemäße Brennstoffzellensystem dient zur Erzeugung von Strom und Wärme aus flüssigen und gasförmigen Brennstoffen. Es weist einen Reformer und einen Brennstoffzellenstack auf, dessen Arbeitstemperatur über 120°C liegt und dessen Abwärme zur Erzeugung von Dampf in Verdampfungskanälen 2 benutzt wird. Die Verdampfungskanäle 2 sind in direktem Wärmekontakt mit dem zu kühlenden Stack 1 angeordnet. Mit einer Druckhalteeinrichtung an dem Ausgang der Verdampfungskanäle 2 wird der Druck in diesen auf einem Wert eingestellt, der die gewünschte Stacktemperatur ergibt.

## Patentansprüche

1. Brennstoffzellensystem zur Erzeugung von Strom und Wärme aus flüssigen und gasförmigen Brennstoffen, das einen Reformer und einen Brennstoffzellenstack aufweist, dessen Arbeitstemperatur über 100°C liegt und dessen Abwärme zur Erzeugung von Dampf in Verdampfungskanälen (2) benutzt wird, **dadurch gekennzeichnet**
- **dass** die Verdampfungskanäle (2) in direktem Wärmekontakt mit dem zu kühlenden Stack (1) angeordnet sind und
- **dass** eine Druckhalteeinrichtung (16) dazu eingerichtet ist, an dem Ausgang der Verdampfungskanäle (2) den Druck in diesen auf einem Wert einzustellen, der die gewünschte Stacktemperatur ergibt,
- **dass** auch ein Shift-Reaktor (5) mit dem Dampf erwärmt oder gekühlt wird, indem er mit Verdampfungskanälen (6) in wärmeübertragender Verbindung steht,
- **dass** die Druckhalteeinrichtung dazu eingerichtet ist, die Verdampfungskanäle (6) zu thermostatieren.

2. Brennstoffzellensystem nach Anspruch 1, **dadurch gekennzeichnet, dass** die Druckhalteeinrichtung ein Druckhalteventil (16) aufweist, vor dem ein Wasserabscheider (15) eingebaut ist.

3. Brennstoffzellensystem nach Anspruch 1, **dadurch gekennzeichnet, dass** der Stack (1) von einem vakuumisolierten Gefäß (3) mit einer Standby-Heizung (4) umhüllt wird.

4. Brennstoffzellensystem nach Anspruch 1, **dadurch gekennzeichnet, dass** der Shift-Reaktor (5) in dem vakuumisolierten Gefäß (3) untergebracht ist.

5. Brennstoffzellensystem nach Anspruch 1, **dadurch gekennzeichnet, dass** die Druckhalteeinrichtung ein Druckhalteventil (16) aufweist und dass nach dem Druckhalteventil (16) eine Strahlpumpe (17) zur Ansaugung des Brennstoffs für den Reformer angeordnet ist.

6. Brennstoffzellensystem nach Anspruch 1, **dadurch gekennzeichnet, dass** von einer Steuereinrichtung (25) die Mengenströme für Brennstoff mit einem Ventil (14), für die Luft mit einem Gebläse (13) und für das Wasser mit einer Pumpe (8) entsprechend dem Bedarf proportional verändert werden.

7. Brennstoffzellensystem nach Anspruch 1, **dadurch gekennzeichnet, dass** der Reformer ein Dampfreformer mit indirekter Beheizung ist.

8. Brennstoffzellensystem nach Anspruch 1, **dadurch gekennzeichnet, dass** der Reformer ein autothermer Reformer ist.

9. Verfahren zur Erzeugung von Strom und Wärme aus flüssigen und gasförmigen Brennstoffen, das einen Reformer und einen Brennstoffzellenstack, dessen Arbeitstemperatur über 100°C liegt und dessen Abwärme zur Erzeugung von Dampf benutzt wird, und einen Shiftreaktor aufweist,
- indem der Stack (1) und der Shift-Reaktor gekühlt werden, indem Verdampfungskanäle (2, 6) in direktem Wärmekontakt mit dem zu kühlenden Stack (1) und Shift-Reaktor (5) stehen und
- indem mit einer Druckhalteeinrichtung an dem Ausgang der Verdampfungskanäle (2) der Druck in diesen auf einem Wert eingestellt wird, der die gewünschte Stacktemperatur ergibt,
- wobei die Verdampfungskanäle (6) durch die Druckhalteeinrichtung (16) thermostatiert sind.

10. Verfahren nach Anspruch 9, **dadurch gekennzeichnet, dass** der erzeugte Dampf mittels einer Strahlpumpe mit Brennstoff für den Reformer vermischt wird.

11. Verfahren nach Anspruch 9, **dadurch gekennzeichnet, dass** von einer Steuereinrichtung (25) die Mengenströme für Brennstoff mit einem Ventil (14), für die Luft mit einem Gebläse (13) und für das Wasser mit einer Pumpe (8) entsprechend dem Bedarf proportional verändert werden.

## Claims

1. Fuel cell system for generating power and heat from liquid and gaseous fuels, which has a reformer and a fuel cell stack, the working temperature of which lies above 100°C and the waste heat thereof is used for generating steam in evaporation ducts (2), **characterised in that**
• the evaporation ducts (2) are arranged in direct thermal contact with the stack (1) to be cooled and
• that a pressure maintaining device (16) is arranged to adjust the pressure in the evaporation ducts (2) at the outlet thereof to a value, which gives the desired stack temperature,
• that a shift reactor (5) is also heated or cooled with the steam **in that** it stands in heat-transfer connection with evaporation ducts (6),
• that the pressure maintaining device is arranged to regulate the temperature of the evaporation ducts (6).

2. Fuel cell system according to claim 1, **characterised in that** the pressure maintaining device has a pressure maintaining valve (16), in front of which a water trap (15) is installed.

3. Fuel cell system according to claim 1, **characterised in that** the stack (1) is enveloped by a vacuum-insulated vessel (3) with a standby heating (4).

4. Fuel cell system according to claim 1, **characterised in that** the shift reactor (5) is housed in the vacuum-insulated vessel (3).

5. Fuel cell system according to claim 1, **characterised in that** the pressure maintaining device has a pressure maintaining valve (16) and that a jet pump (17) is arranged after the pressure maintaining valve (16) to aspirate the fuel for the reformer.

6. Fuel cell system according to claim 1, **characterised in that** the mass flows are varied proportionally as required by a control device (25) with a valve (14) for the fuel, with a fan (13) for the air and with a pump (8) for the water.

7. Fuel cell system according to claim 1, **characterised in that** the reformer is a steam reformer with indirect heating.

8. Fuel cell system according to claim 1, **characterised in that** the reformer is an autothermal reformer.

9. Method for generating power and heat from liquid and gaseous fuels, which has a reformer and a fuel cell stack, the working temperature of which lies above 100°C and the waste heat thereof is used for generating steam, and has a shift reactor,
• in that the stack (1) and the shift reactor are cooled by evaporation ducts (2, 6) standing in direct thermal contact with the stack (1) and shift reactor (5) to be cooled and
• in that with a pressure maintaining device the pressure in the evaporation ducts (2) is adjusted at the outlet thereof to a value, which gives the desired stack temperature,
• wherein the temperature of the evaporation ducts (6) is regulated by the pressure maintaining device (16).

10. Method according to claim 9, **characterised in that** the generated steam is mixed with fuel by means of a jet pump for the reformer.

11. Method according to claim 9, **characterised in that** the mass flows are varied proportionally as required by a control device (25) with a valve (14) for the fuel, with a fan (13) for the air and with a pump (8) for the water.

## Revendications

1. Système de piles à combustible, destiné à produire du courant et de la chaleur à partir de combustibles liquides et gazeux, qui présente un reformeur et un empilement de piles à combustible dont la température de travail est supérieure à 100 °C et dont la chaleur perdue est utilisée pour la production de vapeur dans des canaux de vaporisation (2), **caractérisé en ce que**
- les canaux de vaporisation (2) sont disposés de manière à être en contact thermique direct avec l'empilement (1) à refroidir; et
- qu'un dispositif de maintien de pression (16) est conçu pour régler, à la sortie des canaux de vaporisation (2), la pression dans ceux-ci à une valeur qui donne la température souhaitée de l'empilement;
- qu'en outre un convertisseur (5) est chauffé ou refroidi avec la vapeur, par le fait qu'il est en liaison de transmission de chaleur avec des canaux de vaporisation (6);
- que le dispositif de maintien de pression est conçu pour stabiliser par thermostat les canaux de vaporisation (6).

2. Système de piles à combustible selon la revendication 1, **caractérisé en ce que** le dispositif de maintien de pression présente un clapet de maintien de pression (16), en amont duquel est monté un séparateur d'eau (15).

3. Système de piles à combustible selon la revendication 1, **caractérisé en ce que** l'empilement (1) est entouré d'un récipient (3) à isolation par le vide, doté d'un chauffage d'appoint (4).

4. Système de piles à combustible selon la revendication 1, **caractérisé en ce que** le convertisseur (5) est disposé dans le récipient (3) à isolation par le vide.

5. Système de piles à combustible selon la revendication 1, **caractérisé en ce que** le dispositif de maintien de pression présente un clapet de maintien de pression (16), et **en ce qu'**une pompe à jet (17) est installée en aval du clapet de maintien de pression (16) pour aspirer le combustible pour le reformeur.

6. Système de piles à combustible selon la revendication 1, **caractérisé en ce qu'**un dispositif de commande (25) modifie les flux massiques pour le combustible à l'aide d'une vanne (14), pour l'air à l'aide d'une soufflante (13), et pour l'eau à l'aide d'une pompe (8), proportionnellement en fonction des besoins.

7. Système de piles à combustible selon la revendication 1, **caractérisé en ce que** le reformeur est un reformeur à vapeur à chauffage indirect.

8. Système de piles à combustible selon la revendication 1, **caractérisé en ce que** le reformeur est un reformeur autothermique.

9. Procédé de production de courant et de chaleur à partir de combustibles liquides et gazeux qui présente un reformeur et un empilement de piles à combustible, dont la température de travail est supérieure à 100 °C et dont la chaleur perdue est utilisée pour la production de vapeur, ainsi qu'un convertisseur,
- par le fait que l'empilement (1) et le convertisseur sont refroidis par le fait que des canaux de vaporisation (2, 6) sont en contact thermique direct avec l'empilement (1) à refroidir et avec le convertisseur (5); et
- par le fait qu'à la sortie des canaux de vaporisation (2), un dispositif de maintien de pression règle la pression dans ceux-ci à une valeur qui donne la température souhaitée de l'empilement;
- les canaux de vaporisation (6) étant stabilisés par thermostat par le dispositif de maintien de pression (16).

10. Procédé selon la revendication 9, **caractérisé en ce que** la vapeur produite est mélangée à l'aide d'une pompe à jet avec du combustible pour le reformeur.

11. Procédé selon la revendication 9, **caractérisé en ce qu'**un dispositif de commande (25) modifie les flux massiques pour le combustible à l'aide d'une vanne (14), pour l'air à l'aide d'une soufflante (13), et pour l'eau à l'aide d'une pompe (8), proportionnellement en fonction des besoins.
